(19) Europäisches Patentamt / European Patent Office / Office européen des brevets

(11) **EP 4 353 675 A1**

(12) **EUROPEAN PATENT APPLICATION**
published in accordance with Art. 153(4) EPC

(43) Date of publication:
**17.04.2024 Bulletin 2024/16**

(21) Application number: **22820295.8**

(22) Date of filing: **09.06.2022**

(51) International Patent Classification (IPC):
**C01B 3/00** (2006.01)   **C01B 3/04** (2006.01)
**C01B 6/04** (2006.01)   **C01B 6/10** (2006.01)

(52) Cooperative Patent Classification (CPC):
**C01B 3/00; C01B 3/04; C01B 6/04; C01B 6/10**

(86) International application number:
**PCT/JP2022/023238**

(87) International publication number:
**WO 2022/260116 (15.12.2022 Gazette 2022/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **09.06.2021 JP 2021096732**

(71) Applicants:
• **Tokyo Institute of Technology**
  **Tokyo 152-8550 (JP)**
• **University of Tsukuba**
  **Ibaraki 305-8577 (JP)**

• **Sanoh Industrial Co., Ltd.**
  **Shibuya-ku**
  **Tokyo 150-0002 (JP)**

(72) Inventors:
• **MIYAUCHI, Masahiro**
  **Tokyo 152-8550 (JP)**
• **KONDO, Takahiro**
  **Tsukuba-shi, Ibaraki 305-8577 (JP)**
• **OMIYA, Natsuko**
  **Koga-shi, Ibaraki 306-0041 (JP)**

(74) Representative: **Gille Hrabal**
**Partnerschaftsgesellschaft mbB**
**Patentanwälte**
**Brucknerstraße 20**
**40593 Düsseldorf (DE)**

(54) **STRUCTURAL BODY INCLUDING BORON, HYDROGEN, AND OXYGEN, AND METHOD FOR PRODUCING SAME**

(57)   The object of the present invention is to provide an excellent method for storing and transporting hydrogen.

The object can be solved by a structure comprising boron, hydrogen, and oxygen, that has B-H-B bonds, B-H bonds, and B-OH bonds, and in the measurement of FT-IR spectra, the following formulas are satisfied: (1) $0.80 \leqq a/c \leqq 0.96$, and (2) $0.95 \leqq b/c \leqq 1.12$, wherein when the baseline is defined as 100%, $a$ is the transmittance at 1400 cm$^{-1}$ in the FT-IR spectrum, $b$ is the transmittance at 2500 cm$^{-1}$ in the FT-IR spectrum, and $c$ is the transmittance at 3200cm$^{-1}$ in the FT-IR spectrum.

Figure 1
(A)
(B)

EP 4 353 675 A1

**Description**

TECHNICAL FIELD

The present invention relates to A structure comprising boron, hydrogen, and oxygen, and a method for preparing the same. According to the present invention, hydrogen can be stored efficiently.

BACKGROUND ART

Hydrogen is a clean secondary energy that can be stored and transported. Hydrogen is a gas at normal temperature and pressure, and must be brought to an extremely low temperature (-253 °C) to liquefy. In liquid state, it is difficult to store and transport large amounts safely and at high density. Therefore, it is difficult to store and transport large amounts of hydrogen in liquid form safely and at high density.

As the methods to store and transport hydrogen, there may be mentioned methods using high-pressure tanks, absorbing alloys or the like. However, these methods have a low hydrogen storage per weight or volume. As a method for storing a large amount of hydrogen, a method using hydrogen boride sheet has been developed (Patent literature 1 and Non-Patent literatures 1-3). However, further improvements are expected to increase the amount of hydrogen storage.

CITATION LIST

PATENT LITERATURE

[PATENT LITERATURE 1] WO 2018/074518

NON-PATENT LITERATURE

[NON-PATENT LITERATURE 1] Chem (U.S.A.) 2020, vol.6, p406-
[NON-PATENT LITERATURE 2] nature communications (Great Britain) 2019, vol. 10, p4880-
[NON-PATENT LITERATURE 3] Journal of the American Chemical Society (U.S.A.) 2017, vol.139, p13761-13769

SUMMARY OF INVENTION

TECHNICAL PROBLEM

The object of the present invention is to provide an excellent method for storing and transporting hydrogen.

SOLUTION TO PROBLEM

The present inventors have conducted intensive studies into an excellent method for storing and transporting hydrogen, and as a result, surprisingly found that, a hydrogen boride sheet with specific physical properties can store a large amount of hydrogen.

The present invention is based on the above findings.

Accordingly, the present invention relates to:

[1] a structure comprising boron, hydrogen, and oxygen, that has B-H-B bonds, B-H bonds, and B-OH bonds, and in the measurement of FT-IR spectra, the following formulas are satisfied:

$$(1)\, 0.80 \leqq a/c \leqq 0.96,$$

and

$$(2)\, 0.95 \leqq b/c \leqq 1.12,$$

wherein when the baseline is defined as 100%, a is the transmittance at 1400 cm$^{-1}$ in the FT-IR spectrum, b is the transmittance at 2500 cm$^{-1}$ in the FT-IR spectrum, and c is the transmittance at 3200cm$^{-1}$ in the FT-IR spectrum,

[2] a method for preparing a structure comprising boron, hydrogen, and oxygen, comprising the step of mixing a metal diboride having an MB$_2$ type structure (wherein M is at least one selected from the group consisting of Al, Mg, Ta, Zr, Re, Cr, Ti, and V), and an ion exchange resin in which ion-exchangeable ions with the metal ions constituting the metal diboride are coordinated, in a polar organic solvent,

wherein an average crystallite size of the metal diboride according to Scherrer's equation is 2 to 5 μm,

[3] the method for preparing a structure comprising boron, hydrogen, and oxygen, of the item [2], wherein the average crystallite size of the metal diboride according to Scherrer's equation is 3 to 5 μm,

[4] the method for preparing a structure comprising boron, hydrogen, and oxygen, of the item [2], wherein the average crystallite size of the metal diboride according to Scherrer's equation is 2 to 3 μm.

[5] the method for preparing a structure comprising boron, hydrogen, and oxygen, of the items [2] to [4], comprising the step of filtering with a filter of 3 μm or less after the mixing step,

[6] the method for preparing a structure comprising boron, hydrogen, and oxygen, of the items [2] to [5], wherein the ion exchange resin has a sulfo group,

[7] the method for preparing a structure comprising boron, hydrogen, and oxygen, of the items [2] to [6], wherein the polar organic solvent is acetonitrile or methanol, and

[8] A method for producing molecular hydrogen (H$_2$) comprising the step of irradiating the structure of the item [1] with ultraviolet rays

ADVANTAGEOUS EFFECTS OF INVENTION

According to the hydrogen boride sheet of the present invention, more hydrogen can be stored and transported compared to conventional hydrogen boride sheets. It is possible to produce hydrogen boride sheets that can store a large amount of hydrogen.

BRIEF DESCRIPTION OF THE DRAWINGS

FIG. 1 is a diagram schematically showing the structure of a hydrogen boride sheet containing boron, hydrogen, and oxygen (A) and a three-dimensional diagram showing an ideal hydrogen boride sheet structure consisting only of boron and hydrogen (B).

FIG. 2 is a chart showing the analytical results of MgB$_2$ by X-ray diffraction used in Example 1 (A), Example 2, and Comparative Example 1.

FIG. 3 is a chart showing the analytical results of the FT-IR spectrum of the hydrogen boride sheet obtained in Example 1.

FIG. 4 is a chart showing the analytical results of the FT-IR spectrum of the hydrogen boride sheet obtained in Example 2.

FIG. 5 is a chart showing the analytical results of the FT-IR spectrum of the hydrogen boride sheet obtained in Comparative Example 1.

DESCRIPTION OF EMBODIMENTS

[1] Structure comprising boron, hydrogen, and oxygen

The structure of the present invention has B-H-B bonds, B-H bonds, and B-OH bonds, and comprises boron, hydrogen, and oxygen.

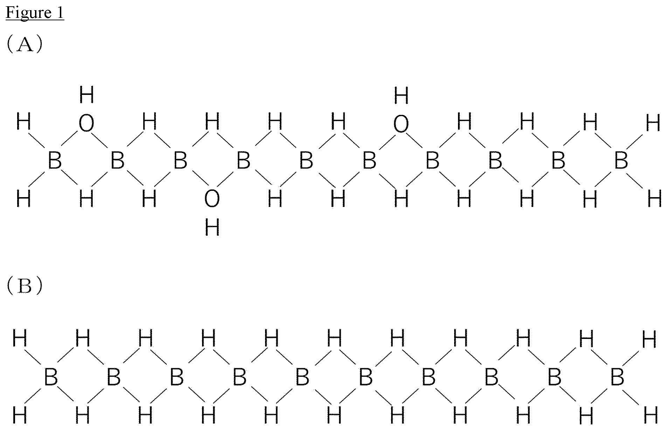

The structure of the present invention comprises boron, hydrogen, and oxygen, that has B-H-B bonds, B-H bonds, and B-OH bonds. Therefore, as shown in Fig. 1(A), it has a structure of (BH)n(BOH)m which is a combination of BH and BOH. In Fig. 1(B), the three-dimensional structure of an ideal structure consisting only of boron and hydrogen is shown. The structure comprising boron, hydrogen, and oxygen of the present invention has a structure in which a part of hydrogen (H) is substituted with a hydroxyl group (OH), and is represented by BHn(OH)m (n+m=1).

<<FT-IR spectrum>>

When measuring the FT-IR spectrum of the structure of the present invention, the following formulas are satisfied:

$$(1)\,0.80 \leqq a/c \leqq 0.96,$$

and

$$(2)\,0.95 \leqq b/c \leqq 1.12,$$

wherein a is the transmittance at 1400 $cm^{-1}$ in the FT-IR spectrum, b is the transmittance at 2500 $cm^{-1}$ in the FT-IR spectrum, and c is the transmittance at 3200$cm^{-1}$ in the FT-IR spectrum.

The transmittance at 1400 $cm^{-1}$ (a) in the FT-IR spectrum indicates "B-H-B bonds", the transmittance at 2500 $cm^{-1}$ (b) in the FT-IR spectrum indicates "B-H bonds", and the transmittance at 3200$cm^{-1}$ (c) in the FT-IR spectrum indicates "B-OH bonds." The lower the transmittance means the greater the content of each bond.

The transmittance of each wavelength is a relative transmittance when the baseline is defined as 100%, and the baseline is set with the value of 1725$cm^{-1}$ as 100%.

The lower limit of a/c is not limited, but is 0.80 or more, preferably 0.82 or more, more preferably 0.84 or more, even more preferably 0.86 or more, and most preferably 0.88 or more. The upper limit of a/c is not limited, but is 0.96 or less, preferably 0.95 or less, and more preferably 0.94 or less. The lower limit and the upper limit can be combined each other. The above ranges allow for the storage and transport of a large amount of hydrogen.

The lower limit of b/c is not limited, but is 0.95 or more, preferably 0.98 or more, more preferably 1.01 or more, even more preferably 1.02 or more, and most preferably 1.03 or more. The upper limit of b/c is not limited, but is 1.12 or less, preferably 1.10 or less, and more preferably 1.08 or less, even more preferably 1.07 or less, and most preferably1.06 or less. The lower limit and the upper limit can be combined each other. The above ranges allow for the storage and transport of a large amount of hydrogen.

The structure of the present invention preferably satisfy (3)d^b. Herein, d is the transmittance at 700 $cm^{-1}$ in the FT-IR spectrum.

Both of the transmittances at 2500 $cm^{-1}$ (b) and 700 $cm^{-1}$ (d) mean the transmittance of the "B-H bonds", and the difference in wavenumbers indicates the difference in the vibrational species of the B-H bonds. The wavenumber of b indicates the stretching vibration of the B-H bonds, and the wavenumber of d indicates the bending vibration of the B-H bonds. Further, in FT-IR analysis, it is generally considered that the smaller the wavenumber, the weaker the bond. Therefore, when d is equal to or less than b, it is presumed that hydrogen is preferentially released from the B-H bond, which is relatively weak, and that the efficient release of hydrogen from the structure will be possible. However, the present invention is not limited by the above presumption.

In the structures of the present invention, i.e., hydrogen boride sheets, when the hydrogen boride sheet is irradiated with ultraviolet light, hydrogen atoms in B-H bonds become molecular hydrogen ($H_2$) and are released from the hydrogen boride sheet. On the other hand, hydrogen atoms in B-OH bonds are not released from the hydrogen boride sheet. In the hydrogen boride sheet, if there are more B-H bonds than B-OH bonds, the amount of released molecular hydrogen ($H_2$) is larger. That is to say, more hydrogen can be stored therein and transported.

The transmittance at 3200 $cm^{-1}$ (c) in the FT-IR spectrum indicates "B-OH bonds." The lower the transmittance (c) means the greater the content of "B-OH bonds." Therefore, when the value of b/c is large, there are many "B-OH bonds" and few "B-H bonds." Conversely, when the value of b/c is small, there are fewer "B-OH bonds" and more "B-H bonds", and a large amount of hydrogen can be stored.

The measurement method of FT-IR spectra is not particularly limited, but the methods commonly used in this field can be used. As the measurement methods, there may be mentioned total reflection method, transmission method, diffuse reflection method, vertical-incidence transmission method, or infrared microscopy method. The total reflection method (Attenuated Total Reflection Spectroscopy: ATR spectroscopy) is preferrable.

For example, it is measured by ATR method using PIKE MIRacle ATR. It is preferable to take a sample four times and measure them under one condition. The wavenumber range to be measured is, for example, 4500 to 600$cm^{-1}$.

A thickness of the structure of the present invention is not particularly limited, but is 0.23 nm to 0.50 nm. In the structure of the present invention, it is preferrable that the length in at least one direction (for example, the length in the X direction or the Y direction in Fig. 1B) is 100 nm or more. If the length of at least one direction in the structure of the present invention is 100 nm or more, the structure of the present invention can be effectively used as a storage material for hydrogen.

The size (area) of the structure of the present invention is not particularly limited. The size of the structure of the present invention can be formed to any size by the method for preparing the structure of the present invention described below.

The structure of the present invention is a substance with a crystalline structure. In addition, in the structure of the present invention, the bonding force between boron atoms (B) forming hexagonal rings and the bonding force between boron atom (B) and hydrogen atom (H) are strong. Therefore, even if multiple stacked crystals (agglomerates) are formed in the manufacturing process, the structure of the present invention can be easily cleaved along the crystal plane and separated (collected) as a single two-dimensional sheet, as is the case with graphite.

[2] Method for preparing structure

The method for preparing a structure of the present invention comprises the step of mixing a metal diboride having an $MB_2$ type structure (wherein M is at least one selected from the group consisting of Al, Mg, Ta, Zr, Re, Cr, Ti, and V), and an ion exchange resin in which ion-exchangeable ions with the metal ions constituting the metal diboride are coordinated, in a polar organic solvent (hereinafter, sometimes referred to as mixing step).

As the metal diboride having $MB_2$ type structure, one having a hexagonal ring structure is used. For example, aluminum diboride ($AlB_2$), magnesium diboride ($MgB_2$), tantalum diboride ($TaB_2$), zirconium diboride ($ZrB_2$), rhenium diboride ($ReB_2$), chromium diboride ($CrB_2$), titanium diboride ($TiB_2$), or vanadium diboride ($VB_2$) are used. Magnesium diboride is preferred because it can be easily ion-exchanged with ion-exchange resins in polar organic solvent.

The crystallite size of the above metal diboride having $MB_2$ type structure is not particularly limited as long as it is possible to produce a structure in which the effects of the present invention can be obtained. However, the average crystallite size is preferably 2 to 5 $\mu m$, 2 to 3 $\mu m$ in one embodiment, 3 to 5 $\mu m$ in another embodiment. The above ranges allow more hydrogen to be stored.

The method for measuring crystallite size is not particularly limited, but it can be measured preferably by X-ray diffraction (XRD).

The diffraction intensity of $MB_2$ powder on the $2\Theta$ axis can be measured by the $\Theta$-$2\Theta$ method of powder diffraction. Specifically, the $MB_2$ powder is fixed in a sample holder for powder measurement. The sample holder in which the $MB_2$ powder is fixed, is placed on the sample holder fixture of the XRD apparatus. The powder is measured by the $\Theta$-$2\Theta$ method. As an X-ray source, a commonly used wavelength such as a Cu target (wavelength: 1.54Å) or a Mo target (wavelength: 0.7Å) can be used. From the obtained diffraction pattern, the crystallite size L (m) is calculated by the following Scherrer's formula from the width at half maximum $\beta$ (radians) of the diffraction peak, the X-ray wavelength $\lambda$ (m), the diffraction angle $\Theta$ (radians), and the crystal shape factor K (unitless, 0.9 is often used to approximate the crystal shape).

$$L=(K\times\lambda)/(\beta\times\cos\Theta)$$

The diffraction angle varies depending on which crystal plane of MB2 the diffraction occurred at, and thus the crystallite size is calculated for each diffraction angle. The obtained crystallite size is the average value. Furthermore, the average range of crystallite size is measured from the range of crystallite sizes calculated from each diffraction

Ion-exchange resin in which ion-exchangeable ions with the metal ions constituting the metal diboride are coordinated, is not particularly limited. As the ion-exchange resin, for example, there may be mentioned a polymer of styrene having a functional group coordinating ion-exchangeable ions with the metal ions constituting the metal diboride (hereafter referred to as "functional group $\alpha$"), a polymer of divinylbenzene with functional group $\alpha$, a copolymer of styrene with functional group $\alpha$ and divinylbenzene with functional group $\alpha$, or the like. The functional group $\alpha$ includes, for example, a sulfo group, a carboxyl group, or the like. Among these, sulfo group is preferrable because it can be easily ion-exchanged with metal ions constituting the metal diboride in polar organic solvents.

The polar organic solvent is not particularly limited, but there may be mentioned acetonitrile, N,N-dimethylformamide, methanol, or the like. Among these, acetonitrile is preferrable because it does not contain oxygen.

In the mixing step, the metal diboride and ion exchange resin are put into a polar organic solvent, and the mixed solution containing the polar organic solvent, metal diboride, and ion exchange resin is stirred to bring the metal diboride and ion exchange resin into contact sufficiently. As a result, the metal ions constituting the metal diboride and the ions of the functional group $\alpha$ of the ion exchange resin are ion-exchanged, to produce the structure of the present invention, i.e., the hydrogen boride sheet, that is formed by the boron atoms and the atoms derived from the functional group $\alpha$ of the ion exchange resin.

For example, when magnesium diboride is used as the metal diboride and an ion exchange resin having sulfo groups is used as the ion exchange resin, the magnesium ion (Mg+) of magnesium diboride is replaced by the hydrogen ion (H+) of the sulfo group of the ion exchange resin to produce the hydrogen boride sheet of the present invention consisting of the boron atom (B) and hydrogen atom (H) as described above.

In the mixing step, it is preferable to gently proceed the ion-exchange reaction between the metal ions constituting the metal diboride and the ions of the functional group $\alpha$ of the ion exchange resin, without applying ultrasound or the like to the mixed solution.

When the mixed solution is stirred, the temperature of the mixed solution is preferably 15°C to 35°C.

The time for stirring the mixed solution is not particularly limited, but is, for example, 700 to 7000 minutes.

In addition, the mixing step is performed under an inert atmosphere consisting of inert gases such as nitrogen (N2) or argon (Ar).

In the method for preparing a structure of the present invention, the mixed solution is preferably filtered (hereinafter sometimes referred to as a filtration step) after the stirring has been completed. The filtration method of the mixed solution is not particularly limited. For example, spontaneous filtration, reduced-pressure filtration, pressurized filtration, and centrifugal filtration are used. Further, as the filter media, filter paper based on cellulose, membrane filters, or filter plates in which cellulose, glass fiber, or the like are compression-mold, is used.

For example, when the membrane filter is used, the filter size is not particularly limited as long as it is possible to produce a structure that achieves the effects of the present invention. For example, the filter size is 5 $\mu$m or less, preferably 4 $\mu$m or less, more preferably 3 $\mu$m or less, more preferably 2 $\mu$m or less, and most preferably 1 $\mu$m or less. The lower limit of filter size is not limited, but 0.1 $\mu$m or more is preferable from the viewpoint of shortening the filtration time.

The solution containing the product, which is separated from the precipitate by filtration and collected, is spontaneously dried or is dried by heating, to obtain only the final product. The product is the hydrogen boride sheet formed by boron atoms and hydrogen atoms derived from the functional group $\alpha$ of the ion exchange resin.

[3] Method for producing molecular hydrogen ($H_2$)

The method for producing molecular hydrogen ($H_2$) comprises the step of irradiating the structure with ultraviolet ray. The wavelength of the ultraviolet ray used is not particularly limited as long as molecular hydrogen ($H_2$) is evolved from the structure, but ultraviolet ray in the range of 10 nm to 400 nm can be used.

UV ray sources is not particularly limited, but, there may be mentioned mercury xenon lamps, high pressure mercury UV lamps, low pressure mercury UV lamps, ultraviolet ray LEDs, ultraviolet ray LDs or metal halide UV lamps.

EXAMPLES

The present invention now will be further illustrated by, but is by no means limited to, the following Examples.

«Example 1»

«Example 1»

In this example, $MgB_2$ with a crystallite particle size of 3-5 $\mu$m was used to prepare a hydrogen boride sheet.

30mL of ion exchange resin (Amberlite IR120B H type made by Organo) was wetted with 20mL of acetonitrile solvent and was allowed to stand in a draft overnight. In a glove box, 500 mg of $MgB_2$ was weighed and charged into a 500-mL flask. The mixture of the ion exchange resin and acetonitrile solvent was filtered through a funnel, and the ion exchange resin was removed. The ion exchange resin and 200 mL of acetonitrile were charged into the flask containing $MgB_2$. A stirrer was placed in the flask and the flask was left for 3 days while stirring. Nitrogen was supplied into the flask during stirring to reduce the exposure of the samples to the atmosphere. The resulting solution was filtered through a 5 $\mu$m filter. Filtration was carried out under a nitrogen atmosphere. To remove the solvent from the solution, it was solvent-dried under reduced pressure to obtain a yellow powder of 100 mg.

The crystallite size of $MgB_2$ used was measured by X-ray diffraction. XRD $\Theta$-$2\Theta$ measurements were performed on $MgB_2$, and the crystallite size was calculated from the width at half maximum of the obtained diffraction peaks using Scherrer's formula below.

$$\text{Crystallite size} = K\ \lambda/\beta\cos\Theta$$

K: crystal structure factor (generally 0.9 (Reference 1)), $\lambda$: X ray wavelength (15.4nm in this case)

$\beta$: width at half maximum of X ray diffraction peaks, $\Theta$: diffraction angle of X ray (Reference article: A.Monshi et al., World Journal of Science and Engineering Vol.2 154-160(2012)

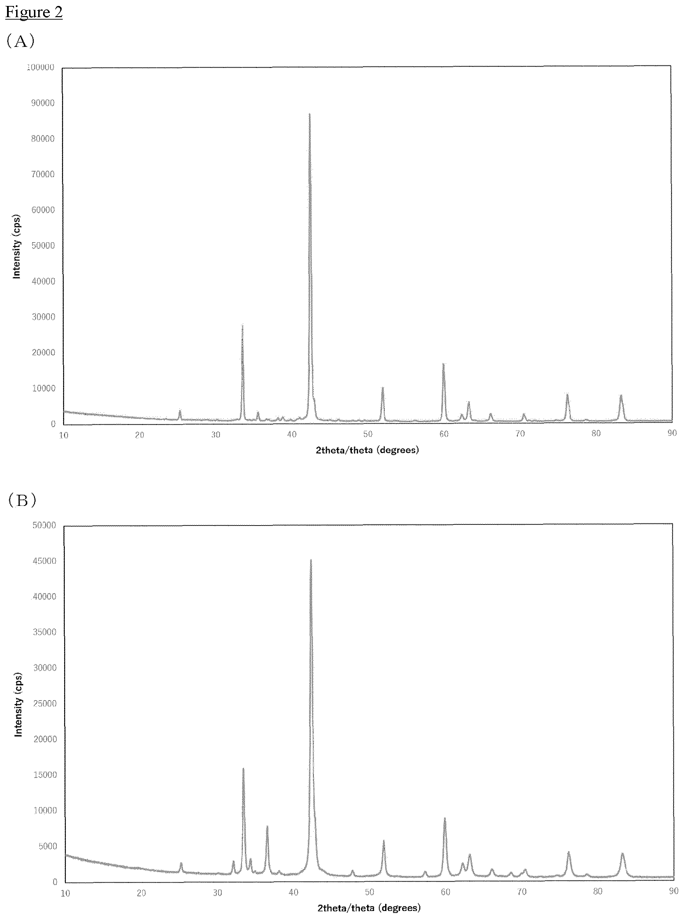

The results of XRD measurements and calculations using Scherrer's equation are shown in Fig. 2 and Tables 1 and 2. The average crystallite size of $MgB_2$ was 3 to 5 $\mu$m.

[Table 1]

| Diffraction crystal plane | Width at half maximum (degrees) | | |
|---|---|---|---|
| | Example 1 | Example 2 | Comparative Example 1 |
| 100 | 0.182 | 0.249 | 0.249 |
| 101 | 0.214 | 0.316 | 0.316 |
| 002 | 0.258 | 0.331 | 0.331 |
| 110 | 0.225 | 0.342 | 0.342 |
| 102 | 0.284 | 0.514 | 0.514 |
| 201 | 0.274 | 0.452 | 0.452 |
| 112 | 0.335 | 0.531 | 0.531 |

[Table 2]

| | | Example 1 | Example 2 | Comparative Example 1 |
|---|---|---|---|---|
| Average crystallite size calculated by Scherrer's equation | Maximum value | 5 | 3 | 3 |
| | Minimum value | 3 | 2 | 2 |

«Example 2»

In this example, $MgB_2$ with a crystallite particle size of 2-3 $\mu$m was used to prepare a hydrogen boride sheet.

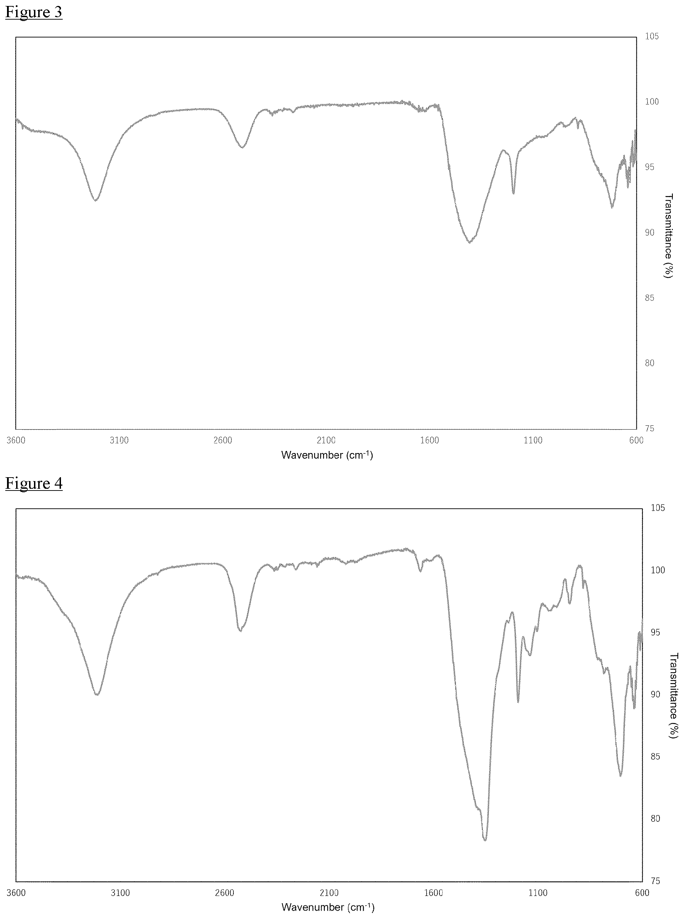

The procedure described in Example 1 was repeated to obtain a yellow powder of 90 mg., except that $MgB_2$ with a crystallite particle size of 2-3 $\mu$m was used, and a 2$\mu$m filter was used. The results of XRD measurements and calculations using Scherrer's equation are shown in Fig. 3 and Tables 1 and 2. The average crystallite size of $MgB_2$ was 2 to 3 $\mu$m.

<<Comparative Example 1>>

In this comparative example, $MgB_2$ with a crystallite particle size of 2-3 $\mu$m was used to prepare a hydrogen boride sheet.

The procedure described in Example 1 was repeated to obtain a yellow powder of 95 mg., except that $MgB_2$ with a crystallite particle size of 2-3 $\mu$m was used. The results of XRD measurements and calculations using Scherrer's equation are shown in Fig. 4 and Tables 1 and 2. The average crystallite size of $MgB_2$ was 2 to 3 $\mu$m.

<<Measurement of FT-IR spectra>>

FT-IR spectra of the hydrogen boride sheets obtained in Examples 1 and 2 and in Comparative Example 1 were measured using an ATR measurement unit.

About 10 mg of the powder of hydrogen boride sheet was placed on a crystal (diamond) used for the total reflection of infrared light. The powder was pressed down with a pin and adhered to the crystal. The ATR measurement unit was set in the FT-IR apparatus, and infrared light was incident from the crystal side, and the light obtained by total reflection from the crystal was dispersed. The result obtained without powder was used as a background, and this background data was subtracted from the powder data to measure the transmittance of the hydrogen boride sheets.

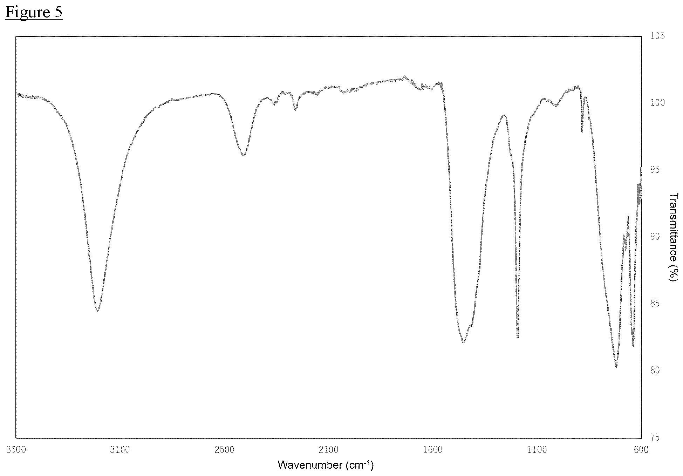

The results of the measurements of the hydrogen boride sheets of Examples 1 and 2 and of Comparison 1 are shown in Figs. 3 to 5, respectively.

In the hydrogen boride sheets of Example 1 and 2 and Comparative Example 1, The averaged values of transmittance ratios a/c and b/c were calculated for the spectra obtained for each sample, assuming that the transmittance at 1400 $cm^{-1}$ is due to B-H-B bonds (a), the transmittance at 2500 $cm^{-1}$ is due to B-H bonds (b), and the transmittance at 3200 $cm^{-1}$ is due to B-OH bonds (c). The averaged values for each synthesis condition are shown in Table 3. A smaller transmittance ratio indicates a higher content. That is, a larger value indicates a higher content of BOH.

[Table 3]

|  | Example 1 | Example 2 | Comparative Example 1 |
|---|---|---|---|
| a | 85.95 | 78.10 | 79.72 |
| b | 94.26 | 94.54 | 93.75 |
| c | 91.79 | 89.17 | 82.14 |
| d | 87.44 | 77.58 | 78.91 |
| a(BHB)/c(BOH) | 0.94 | 0.88 | 0.97 |
| B(BH)/c(BOH) | 1.03 | 1.06 | 1.15 |

<<Hydrogen releasing test>>

The hydrogen boride sheets obtained in Examples 1 and 2 and Comparative Example 1 was irradiated with ultraviolet ray to measure the production amount of molecular hydrogen ($H_2$).

A sample of 10 mg was placed in a sealed container. A quartz glass was used for the window of the sealed container to allow light to penetrate during UV irradiation against the sample. Argon gas flowed into the sealed container at a rate of 10 mL/min. The samples were irradiated with UV light at a distance of 10 cm using a mercury xenon lamp, and the concentration of produced hydrogen gas was measured by a micro GC. Changes in hydrogen concentration were measured for 480 minutes. The integrated values of hydrogen concentration obtained for each sample during the measurement time are shown in Table 4.

[Table 4]

|  | Example 1 | Example 2 | Comparative Example 1 |
|---|---|---|---|
| Integrated values of hydrogen concentration (ppm) | 280397 | 213476 | 176858 |

After irradiation, the samples turned brown. When viewed from the side, about half of the sample in the thickness direction turned brown. Therefore, it was considered that about 5 mg of the sample reacted to the light irradiation. Accordingly, the weight of the sample was assumed to be 5 mg, and the weight of hydrogen produced per sample weight and the volume of hydrogen produced per sample volume were calculated from the volume of the chamber and the integrated value of hydrogen concentration. The results are shown in Table 5. In the calculation per volume, the density of the hydrogen boride sheet is assumed to be equal to the density of boron and it was calculated.

[Table 5]

|  | Example 1 | Example 2 | Comparative Example 1 |
|---|---|---|---|
| Weight of hydrogen produced (wt%) | 3.1 | 2.4 | 2.0 |
| Volume of hydrogen produced (g/L) | 62 | 48 | 40 |

Compared with Comparative Example 1, the hydrogen boride sheets obtained in Examples 1 and 2 are considered to be capable of storing and releasing a large amount of hydrogen.

INDUSTRIAL APPLICABILITY

The structure of the present invention can be used for storage and transport of hydrogen and can produce a large amount of molecular hydrogen ($H_2$).

**Claims**

1. A structure comprising boron, hydrogen, and oxygen, that has B-H-B bonds, B-H bonds, and B-OH bonds, and in the measurement of FT-IR spectra, the following formulas are satisfied:

$$(1)\, 0.80 \leqq a/c \leqq 0.96,$$

and

$$(2)\, 0.95 \leqq b/c \leqq 1.12,$$

wherein when the baseline is defined as 100%, a is the transmittance at 1400 $cm^{-1}$ in the FT-IR spectrum, b is the transmittance at 2500 $cm^{-1}$ in the FT-IR spectrum, and c is the transmittance at 3200$cm^{-1}$ in the FT-IR spectrum.

2. A method for preparing a structure comprising boron, hydrogen, and oxygen, comprising the step of mixing a metal diboride having an $MB_2$ type structure (wherein M is at least one selected from the group consisting of Al, Mg, Ta, Zr, Re, Cr, Ti, and V), and an ion exchange resin in which ion-exchangeable ions with the metal ions constituting the metal diboride are coordinated, in a polar organic solvent,
wherein an average crystallite size of the metal diboride according to Scherrer's equation is 2 to 5 $\mu$m.

3. The method for preparing a structure comprising boron, hydrogen, and oxygen, according to claim 2, wherein the average crystallite size of the metal diboride according to Scherrer's equation is 3 to 5 $\mu$m.

4. The method for preparing a structure comprising boron, hydrogen, and oxygen, according to claim 2, wherein the average crystallite size of the metal diboride according to Scherrer's equation is 2 to 3 $\mu$m.

5. The method for preparing a structure comprising boron, hydrogen, and oxygen, according to any one of claims 2 to 4, comprising the step of filtering with a filter of 3 $\mu$m or less after the mixing step.

6. The method for preparing a structure comprising boron, hydrogen, and oxygen, according to any one of claims 2 to 5, wherein the ion exchange resin has a sulfo group.

7. The method for preparing a structure comprising boron, hydrogen, and oxygen, according to any one of claims 2 to 6, wherein the polar organic solvent is acetonitrile or methanol.

8. A method for producing molecular hydrogen ($H_2$) comprising the step of irradiating the structure according to claim 1 with ultraviolet rays.

Figure 1

(A)

(B)

## Figure 2

(A)

(B)

Figure 3

Figure 4

Figure 5

## INTERNATIONAL SEARCH REPORT

| International application No. |
|---|
| **PCT/JP2022/023238** |

**A.    CLASSIFICATION OF SUBJECT MATTER**

*C01B 3/00*(2006.01)i; *C01B 3/04*(2006.01)i; *C01B 6/04*(2006.01)i; *C01B 6/10*(2006.01)i
FI:    C01B3/00 B; C01B3/04 Z; C01B6/04; C01B6/10

According to International Patent Classification (IPC) or to both national classification and IPC

**B.    FIELDS SEARCHED**

Minimum documentation searched (classification system followed by classification symbols)

C01B3/00; C01B3/04; C01B6/04; C01B6/10

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus/JST7580/JSTChina (JDreamIII); CAplus/REGISTRY (STN)

**C.    DOCUMENTS CONSIDERED TO BE RELEVANT**

| Category* | Citation of document, with indication, where appropriate, of the relevant passages | Relevant to claim No. |
|---|---|---|
| A | WO 2021/095619 A1 (TOYKO INSTITUTE OF TECHNOLOGY) 20 May 2021 (2021-05-20) entire text | 1-8 |
| A | WO 2018/074518 A1 (UNIVERSITY OF TSUKUBA) 26 April 2018 (2018-04-26) entire text | 1-8 |
| A | JP 2019-218251 A (TOYKO INSTITUTE OF TECHNOLOGY) 26 December 2019 (2019-12-26) entire text | 1-8 |
| A | JP 2011-148644 A (TOYOTA MOTOR CORP) 04 August 2011 (2011-08-04) paragraph [0016] | 1-8 |

☐ Further documents are listed in the continuation of Box C.          ☑ See patent family annex.

| | |
|---|---|
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
| **05 August 2022** | **16 August 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2022/023238**

| Patent document cited in search report | | | Publication date (day/month/year) | Patent family member(s) | | | Publication date (day/month/year) |
|---|---|---|---|---|---|---|---|
| WO | 2021/095619 | A1 | 20 May 2021 | (Family: none) | | | |
| WO | 2018/074518 | A1 | 26 April 2018 | US entire text EP | 2019/0315628 3514114 | A1 A1 | |
| JP | 2019-218251 | A | 26 December 2019 | (Family: none) | | | |
| JP | 2011-148644 | A | 04 August 2011 | (Family: none) | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2018074518 A

### Non-patent literature cited in the description

- *Chem (U.S.A.),* 2020, vol. 6, 406
- *nature communications (Great Britain),* 2019, vol. 10, 4880
- *Journal of the American Chemical Society (U.S.A.),* 2017, vol. 139, 13761-13769
- **A.MONSHI et al.** *World Journal of Science and Engineering,* 2012, vol. 2, 154-160